# EUROPEAN PATENT APPLICATION

(11) **EP 4 039 522 A1**
(43) Date of publication of application: **10.08.2022**
(21) Application number: 22155316.7
(22) Date of filing: 07.02.2022
(51) Int. Cl.: B60K 37/06, B60R 16/00, H01H 25/00

(54) **OPERATION DEVICE**

(30) Priority: 09.02.2021 JP 2021019345
(71) Applicant: TOYO DENSO KABUSHIKI KAISHA, Minato-ku Tokyo 105-0004 (JP); TOYOTA JIDOSHA KABUSHIKI KAISHA, Toyota-shi Aichi 471-8571 (JP)
(72) Inventor: NEGISHI, Shigeho, Tsurugashima-shi, 350-2280 (JP); OSHIMA, Takuya, Toyota-shi, 471-8571 (JP)
(74) Representative: Betten & Resch

(57) **Abstract**

An operation device according to the present invention is an operation device including an operating unit capable of an opening-and-closing operation to operate opening and closing of a window mounted on a vehicle. The operating unit is configured to be capable of the opening-and-closing operation at a reference position, and is configured so that the operating unit itself shifts from the reference position to another position by a shifting operation and, when the shifting operation is canceled, the operating unit itself returns from the other position to the reference position. Furthermore, the operating unit is configured to accept the opening-and-closing operations when the operating unit is located at the reference position before and after shifting to the other position by the shifting operation as operation instructions to open and close different windows, respectively.

## Description

This application is based upon and claims the benefit of priority from Japanese patent application No. 2021-019345, filed on February 9, 2021, the disclosure of which is incorporated herein in its entirety by reference.

### TECHNICAL FIELD

The present invention relates to an operation device to operate a window of a vehicle.

### BACKGROUND ART

As an operation device to operate a window mounted on a vehicle, devices shown in Patent Documents 1 and 2 are known. Each of the operation devices shown in Patent Documents 1 and 2 is an operation device installed in a driver's seat and is configured to be capable of operating not only a window placed in the driver's seat but also a window placed in another seat.

Specifically, the operation device described in Patent Document 1 includes an operation panel provided with two up-and-down operation elements corresponding to two windows, respectively. The operation panel is configured to be located at three positions along the fore-and-aft direction, and its location can be shifted by operating a protruding operation unit provided on the side surface of the operation panel. When the operation panel is located in a middle position among the three positions, the two up-and-down operation elements serve as operation elements corresponding to two windows on the front side (a window on the driver's seat side and a window on the passenger seat side), respectively. When the operation panel is located in a rear position, the two up-and-down operation elements serve as operation elements corresponding to two windows on the rear side (a window on the right rear seat side and a window on the left rear seat side), respectively.

The operation device described in Patent Document 2 includes a switch button that is slidable in a plurality of directions and that can be pressed at the respective slide positions. The slide positions correspond to four seats (a driver's seat, a passenger seat, a right rear seat, and a left rear seat), respectively. Therefore, when located at each of the slide positions, the switch button functions as a switch button to operate a window corresponding to the position.
Patent Document 1: Japanese Unexamined Utility Model Application Publication No. 63-058437 (1988)
Patent Document 2: Japanese Unexamined Utility Model Application Publication No. 63-080735 (1988)

However, the above operation device to operate a window of a vehicle has a problem that the operability cannot be further increased. For example, with regard to the operation device described in Patent Document 1, there is a need to operate the protruding operation unit provided on the side surface of the operation panel and also operate the up-and-down operation element, so that the operation is complicated and the operability cannot be further increased. With regard to the operation device described in Patent Document 2, the operator needs to operate while visually checking the slide operation position of the switch button, so that the operation is not simple and the operability cannot be further increased.

### SUMMARY OF THE INVENTION

Accordingly, an object of the present invention is to solve the abovementioned problem that the operability of an operation device to operate a window of a vehicle cannot be further increased.

An operation device as an aspect of the present invention is an operation device including an operating unit capable of an opening-and-closing operation to operate opening and closing of a window mounted on a vehicle. The operating unit is configured to be capable of the opening-and-closing operation at a reference position, and is configured so that the operating unit itself shifts from the reference position to another position by a shifting operation and, when the shifting operation is canceled, the operating unit itself returns from the other position to the reference position. Furthermore, the operating unit is configured to accept the opening-and-closing operations when the operating unit is located at the reference position before and after shifting to the other position by the shifting operation as operation instructions to open and close different windows, respectively.

Further, a window opening-and-closing control method as an aspect of the present invention is a window opening-and-closing control method executed by an operation device comprising an operating unit capable of an opening-and-closing operation to operate opening and closing of a window mounted on a vehicle. The window opening-and-closing control method includes: controlling to open and close a predetermined window by the opening-and-closing operation at a reference position of the operating unit; and controlling to open and close another window that is different from the predetermined window by the opening-and-closing operation at the reference position of the operating unit after the operating unit itself shifts from the reference position to another position by a shifting operation and returns from the other position to the reference position by cancelation of the shifting operation.

With the configurations as described above, the present invention can further increase the operability of an operation device to operate a window of a vehicle.

### BRIEF DESCRIPTION OF DRAWINGS

Fig. 1 is a view showing a configuration of an operation device in a first example embodiment of the present invention;
Fig. 2 is a block diagram showing an outline of a configuration for enabling a window to move including an operation switch disclosed in Fig. 1;
Fig. 3 is a view showing a movement of the operation switch disclosed in Fig. 1;
Fig. 4 is a view showing a movement of the operation switch disclosed in Fig. 1;
Fig. 5 is a view showing a movement of the operation switch disclosed in Fig. 1;
Fig. 6 is a view showing a movement of the operation switch disclosed in Fig. 1; and
Fig. 7 is a flowchart showing an opening-and-closing movement of the window by the operation device disclosed in Fig. 1.

### EXAMPLE EMBODIMENT

### <First Example Embodiment

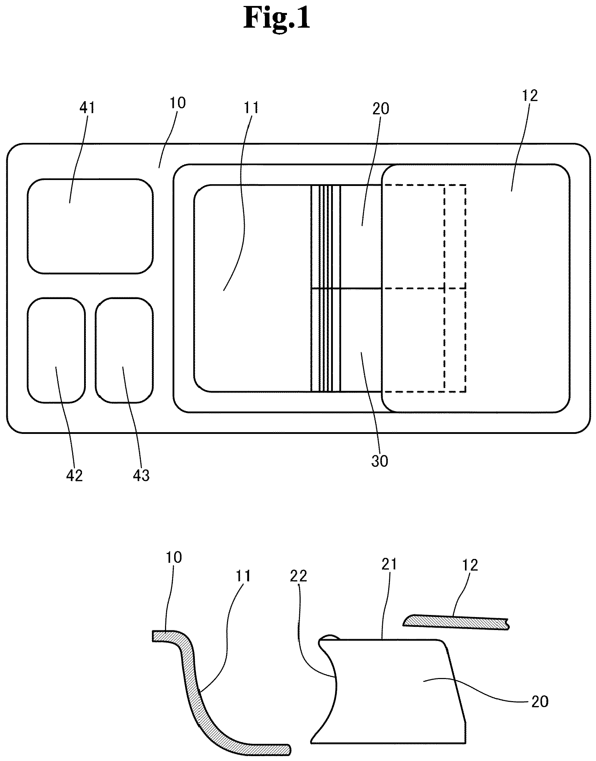

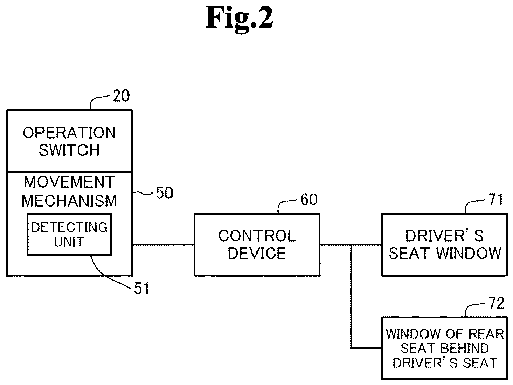

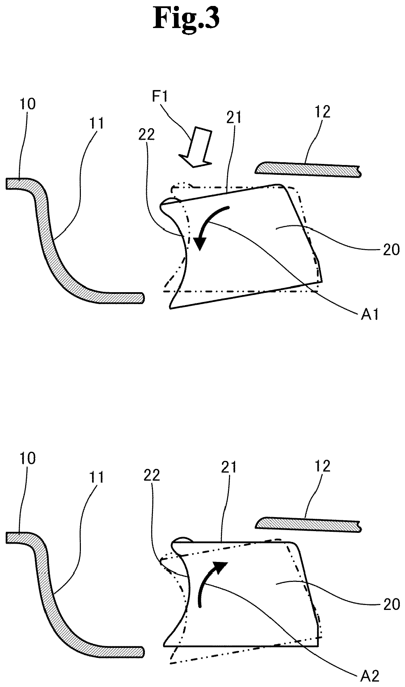

A first example embodiment of the present invention will be described with reference to Figs. 1 to 7. Figs. 1 and 2 are views for describing a configuration of an operation device, and Figs. 3 to 7 are views for describing a movement of the operation device.

### [Configuration]

The operation device according to the present invention is for operating to open and close a window of an automobile that is a vehicle, and is arranged, for example, on an armrest provided on a seat door. In particular, the operation device in this example embodiment is arranged on an armrest provided on a driver's seat door, includes two operation switches 20 and 30 (an operating unit), and can operate to open and close windows of four seats (a driver's seat, a passenger seat, a rear seat behind driver's seat, a rear seat behind passenger seat). However, the operation device of the present invention is not necessarily limited to being provided on a driver's seat door, and may be provided on another seat door or at any place in a vehicle, not limited to a door. Moreover, the operation device of the present invention is not necessarily limited to including two operation switches, and may include any number of operation devices. Furthermore, the operation device of the present invention is not limited to being configured to be capable of operating windows of two seats with one operation switch as will be described later, and may be configured to be capable of operating to open and close windows of three or more seats with one operation switch.

An upper view of Fig. 1 is a view of the operation device in this example embodiment as seen from above. In this view, the left side is the front side of the vehicle and the right side is the rear side of the vehicle. Therefore, the window of the driver's seat is located in the vicinity of the operation device, and the window of the rear seat behind the driver' seat is located backward from the operation device.

As shown in the upper view of Fig. 1, the upper surface of the operation device is covered with a substantially rectangular cover 10. The operation device has, from the vicinity of the middle to the rear side, the two operation switches 20 and 30 for operating to open and close the windows and has, on the front side, other switches 41, 42 and 43 such as a switch for locking the windows and a switch for locking the doors and unlocking the doors. Since the present invention is characterized by the operation switches 20 and 30 to operate to open and close the windows, the configurations of the operation switches 20 and 30 will be described in detail below.

A lower view of Fig. 1 is a schematic view of part of the upper view of Fig. 1 as seen from side. In particular, only the operation switch denoted by reference numeral 20 and the cover 10 therearound are shown. As shown in this view, in the vicinity of the middle of the cover 10 of the operation device, a recess 11 recessed inward is formed, a part located at the back of the recess 11 is cut off, and the operation switch 20 is arranged in the cut-off part. At the back of the cover 10, an upper cover 12 that covers the upper part on the rear side of the operation switch 20 is formed.

The operation switch 20 is formed in a substantially rectangular parallelepiped shape, an upper surface thereof forms a first operation surface 21, and a side surface on the front side forms a second operation surface 22. On the first operation surface 21 that is the upper surface of the operation switch 20, a protrusion extending in the width direction is formed on the front side and serves as a locking unit by which the operating finger is locked when the operator performs an operation to push downward as will be described later. The second operation surface 22 that is the side surface on the front side of the operation switch 20 is formed in a recessed shape recessed backward on the whole and is operated by the operator to pull upward and pull backward as will be described later. The operation switch 20 is located at a "reference position" shown in the upper and lower views of Fig. 1 when not operated at all as will be described later. Moreover, the above operation switch denoted by reference numeral 20 is for operating two windows, that is, a driver's seat window and a window of rear seat behind driver's seat located behind the driver's seat window. The other operation switch denoted by reference numeral 30 is for operating two windows, that is, a passenger seat window and a window of rear seat behind passenger seat located behind the passenger seat window. Although a configuration of the operation switch 20 will be described below, a configuration of the operation switch 30 is the same and therefore a detailed description thereof will be omitted. Although this example embodiment illustrates a case where the operation device is mounted in a vehicle having a specification that a steering wheel is located in the right front seat and the operation device is arranged in the driver's seat, the operation device may be mounted in a vehicle having a specification that a steering while is located in the left front seat. In such a case, the arrangement of the operation switches 20 and 30 will be exchanged.

The outline of a configuration provided in a vehicle for the purpose of moving a driver's seat window 71 and a window 72 of rear seat behind driver's seat that are operated by the operation switch 20 is shown by a block diagram of Fig. 2. As shown in Fig. 2, the operation switch 20 is mounted on and supported by a movement mechanism 50 on the inner side of the cover 10 and is moved by the movement mechanism 50 as shown in Figs. 3 to 6 to be described later. The movement mechanism 50 is not shown in Fig. 1. The movement mechanism 50 is equipped with a detecting unit 51, and the detecting unit 51 detects the state of a movement by the operation of the operation switch 20. Moreover, the movement state of the operation switch 20 detected by the detecting unit 51 is notified to a control device 60 mounted on the vehicle. The control device 60 specifies in accordance with the notified movement state of the operation switch 20 whether the operation is on the driver's seat window 71 or on the window 72 of rear seat behind driver's seat and whether the operation is to open or close, and controls the window 71 or 72 to open or close.

Specifically, the operation switch 20 is capable of opening-and-closing operations to operate the opening and closing of the window. An operation to open the window, which is one of the opening-and-closing operations on the operation switch 20, is an operation of pushing down the first operation surface 21 that is the upper surface of the operation switch 20 as shown by arrow F1 in an upper view of Fig. 3. When the operation F1 of pushing down the first operation surface 21 is performed by the operator, the operation switch 20 can be moved by the movement mechanism 50 so that part of the operation switch 20 descends. More specifically, as shown by arrow A1 in the upper view of Fig. 3, the operation switch 20 can be rotationally moved by the movement mechanism 50 so that a portion on the front side descends from a reference position indicated by dashed and double-dotted line to an opening operation position indicated by solid line with a fulcrum at a predetermined position of the lower rear portion of the operation switch 20 itself. At this time, the detecting unit 51 detects that the operation of opening the window has been performed, and the control device 60 accepts it as an instruction of the operation to open the window. Then, when the operation F1 to push down the first operation surface 21 by the operator is canceled, the operation switch 20 is rotationally moved by the movement mechanism 50 so as to return to the reference position indicated by solid line from the opening operation position indicated by dashed and double-dotted line as shown by arrow A2 in the lower view of Fig. 3. At this time, the detecting unit 51 detects that the operation to open the window has been canceled, and the control device 60 accepts it as the stoppage of the instruction of the operation to open the window.

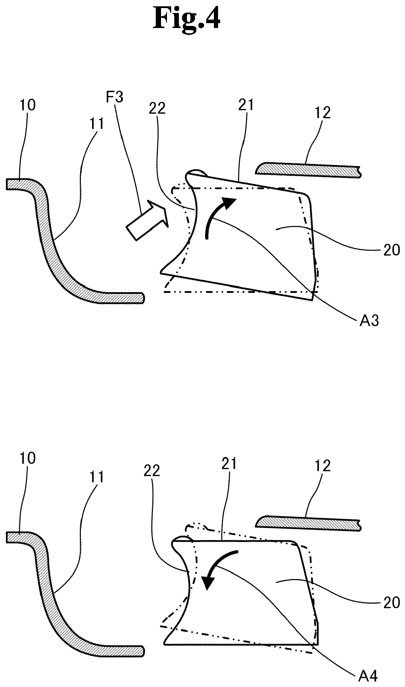

Further, an operation to close the window, which is one of the opening-and-closing operations on the operation switch 20, is an operation of pulling up the second operation surface 22 formed by a recessed surface that is the side surface on the front side of the operation switch 20 as shown by arrow F3 in an upper view of Fig. 4. When the operation F3 of pulling up the second operation surface 22 is performed by the operator, the operation switch 20 can be moved by the movement mechanism 50 so that part of the operation switch 20 ascends. More specifically, as shown by arrow A3 in the upper view of Fig. 4, the operation switch 20 can be rotationally moved by the movement mechanism 50 so that a portion on the front side ascends from the reference position indicated by dashed and double-dotted line to a closing operation position indicated by solid line with the fulcrum at the predetermined position of the lower rear portion of the operation switch 20 itself. At this time, the detecting unit 51 detects that the operation to close the window has been performed, and the control device 60 accepts it as an instruction of the operation to close the window. Then, when the operation F3 to pull up the second operation surface 22 by the operator is canceled, the operation switch 20 can be rotationally moved by the movement mechanism 50 so as to return to the reference position indicated by solid line from the closing operation position indicated by dashed and double-dotted line as shown by arrow A4 in a lower view of Fig. 4. At this time, the detecting unit 51 detects that the operation to close the window has been canceled, and the control device 60 accepts it as the stoppage of the instruction of the operation to close the window.

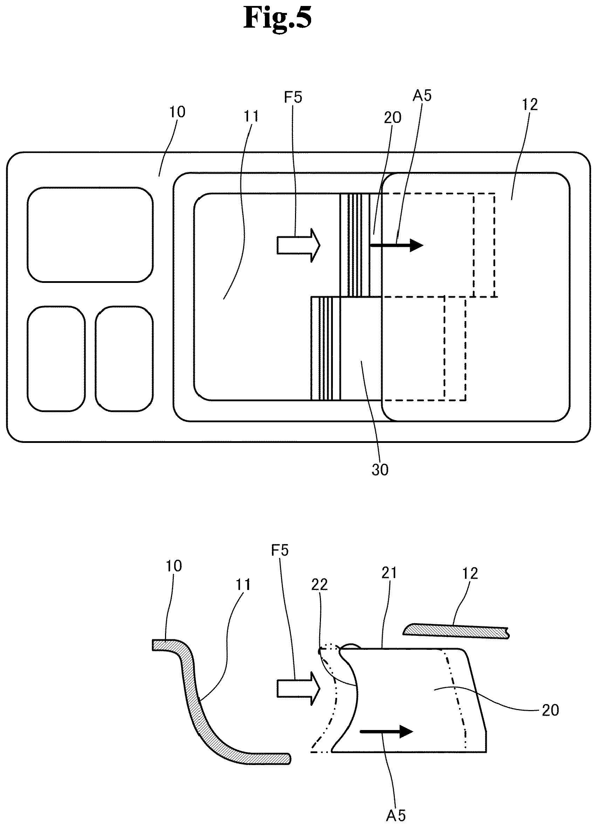

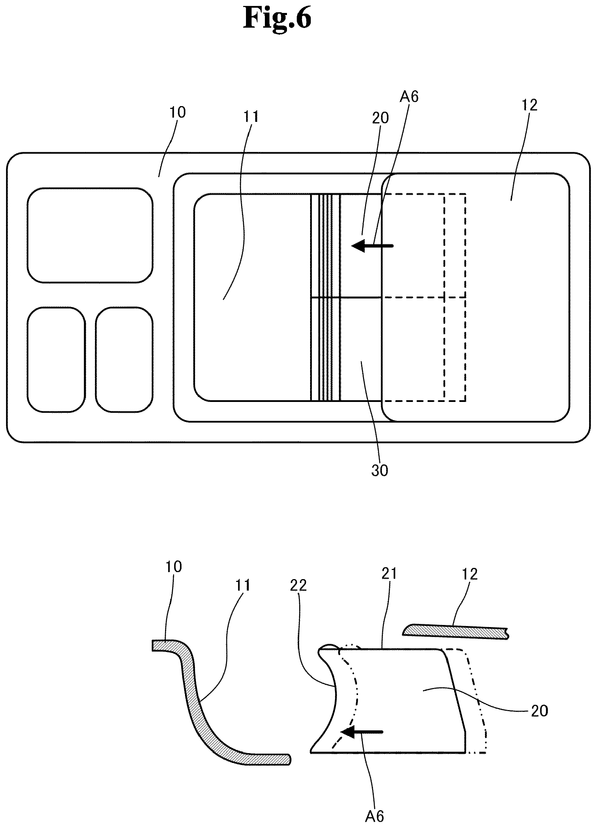

Furthermore, the operation switch 20 is capable of, in addition to the opening-and-closing operations to operate the opening and closing of the window described above, an operation to switch a window to be an opening-and-closing target, that is, a slide operation (a shifting operation) to shift the position of the operation switch 20 itself. When the operator performs an operation to pull back the second operation surface 22 as shown by arrow F5 in upper and lower views of Fig. 5, the operation switch 20 can be moved by the movement mechanism 50 so that the whole operation switch 20 slides backward. More specifically, as shown by arrow A5 in the upper and lower views of Fig. 5, the operation switch 20 is linearly slid and shifted toward the rear of the vehicle by the movement mechanism 50 from the reference position indicated by dashed and double-dotted line to a slide position (another position) indicated by solid line. Then, when the operation F5 to pull back the second operation surface 22 by the operator is canceled, the operation switch 20 is slid and shifted by the movement mechanism 50 so as to return to the reference position indicated by solid line from the slide position indicated by dashed and double-dotted line as shown by arrow A6 in the upper and lower views of Fig. 6.

When the operation switch 20 is slid and shifted in the above manner, the detecting unit 51 detects that the slide operation has been performed and notifies it to the control device 60. Then, the control device 60 switches a window to be an opening-and-closing operation target by the operation switch 20 between before and after the slide operation. For example, the control device 60 sets a window of an opening-and-closing operation target by the operation switch 20 to the "driver's seat window" at the time of initialization such as when the engine starts and, when accepting notification that a backward slide operation has been performed in this state, the control device 60 switches and sets the window of the opening-and-closing operation target to the "window of rear seat behind driver's seat". Thus, the control device 60 sets the opening-and-closing operation target to the "driver's seat window" located on the front side in the vehicle (a first window) at the time of initialization, and sets the opening-and-closing operation target to the "window of rear seat behind driver's seat" located on the rear side in the vehicle after the operation switch 20 is operated to slide backward. Information representing whether the operation target of the operation switch 20 is set to the window of the driver's seat that is a front seat or the window of the rear seat behind the driver's seat that is a rear seat may be displayed in an indicator or an instrument panel installed at any position in the vehicle.

In a case where, when the operation switch 20 is operated to slide backward and the opening-and-closing operation target is thereby set to the "rear seat behind driver's seat" as described above, the operation switch 20 is operated to slide backward again, the control device 60 switches and sets the opening-and-closing operation target so as to return to the "driver's seat window". Moreover, when the operation switch 20 is operated to slide backward and the opening-and-closing operation target is thereby set to the "rear seat behind driver's seat" as described above, the control device 60 may switch and set the opening-and-closing operation target so as to return to the "driver's seat window" after a lapse of a predetermined time (for example, 60 seconds). However, another condition may be set as a condition for the control device 60 to return the opening-and-closing operation target from the "rear seat behind driver's seat" to the "driver's seat window". For example, in a case where, when the opening-and-closing operation target of the operation switch 20 is set to the "rear seat behind driver's seat", the operating condition of the automobile satisfies a preset condition such as the gearshift of the automobile is shifted to Park or the engine is started after stopped, the control device 60 may switch and set the opening-and-closing operation target to return to the "driver's seat window".

Then, when the operation switch 20 is operated to open or close at the reference position as described above and accepts an instruction of the operation to open the window or an instruction of the operation to close the window, the control device 60 accepts the operation instruction as an operation instruction for the window set as the opening-and-closing operation target of the operation switch 20 at the time. For example, assuming that it is the time of initialization after the engine of the vehicle is started and a window of the target for the opening-and-closing operation by the operation switch 20 is set to the "driver's seat window". When the operation switch 20 accepts an operation instruction to open the window as shown in the upper view of Fig. 3 at the reference position, the control device 60 controls to open the "driver's seat window". When the operation switch 20 accepts an operation instruction to close the window as shown in the upper view of Fig. 4 at the reference position, the control device 60 controls to close the "driver's seat window". After that, the control device 60 sets a window to be the target for the opening-and-closing operation by the operation switch 20 to the "window of rear seat behind driver's seat" when the operation switch 20 is operated to slide backward, controls to open the "window of rear seat of driver's seat" when the operation switch 20 accepts an operation instruction to open the window as shown in the upper view of Fig. 3 at the reference position, and controls to close the "window of rear seat behind driver's seat" when the operation switch 20 accepts an operation instruction to close the window as shown in the upper view of Fig. 4 at the reference position.

Thus, the operation switch 20 sets the opening-and-closing operation target to different windows before and after the backward slide operation, and accepts an opening-and-closing operation performed at the reference position as an opening-and-closing operation instruction for the window of the opening-and-closing operation target at the time. For example, when the operation switch denoted by reference numeral 20 is operated to open or close at the reference position before the backward slide operation at the time of initialization, the operation switch denoted by reference numeral 20 accepts it as an operation instruction to open or close the "driver's seat window" located on the front side in the automobile. After that, when operated to open or close at the reference position after the backward slide operation is performed, the operation switch denoted by reference numeral 20 accepts it as an operation instruction to open or close the "window of rear seat behind driver's seat" located on the rear side in the automobile. Likewise, for example, when the operation switch denoted by reference numeral 30 is operated to open or close at the reference position before the backward slide operation at the time of initialization, the operation switch denoted by reference numeral 30 accepts it as an operation instruction to open or close the "passenger seat window" located on the front side in the automobile. After that, when operated to open or close at the reference position after the backward slide operation is performed, the operation switch denoted by reference numeral 30 accepts it as an operation instruction to open or close the "window of rear seat behind passenger seat" located on the rear side in the automobile.

The movement mechanism 50 is configured so that the vertical movement (rotation movement) of the operation switch 20 by the opening-and-closing operation and the slide movement of the operation switch 20 by the slide operation do not occur simultaneously. That is to say, the movement mechanism 50 is configured so that, while the operation switch 20 is vertically moved (rotationally moved) by the opening-and-closing operation as shown in Figs. 3 and 4, the operation switch 20 is not enabled to slide even if a slide operation force as shown by arrow F5 in Fig. 5 is applied. Moreover, the movement mechanism 50 is configured so that, while the operation switch 20 is enabled to slide by the slide operation as shown in Figs. 5 and 6, the operation switch 20 cannot be vertically moved (rotationally moved) even if an opening-and-closing operation force as shown by arrows F1 and F3 in Figs. 3 and 4 is applied.

### [Movement]

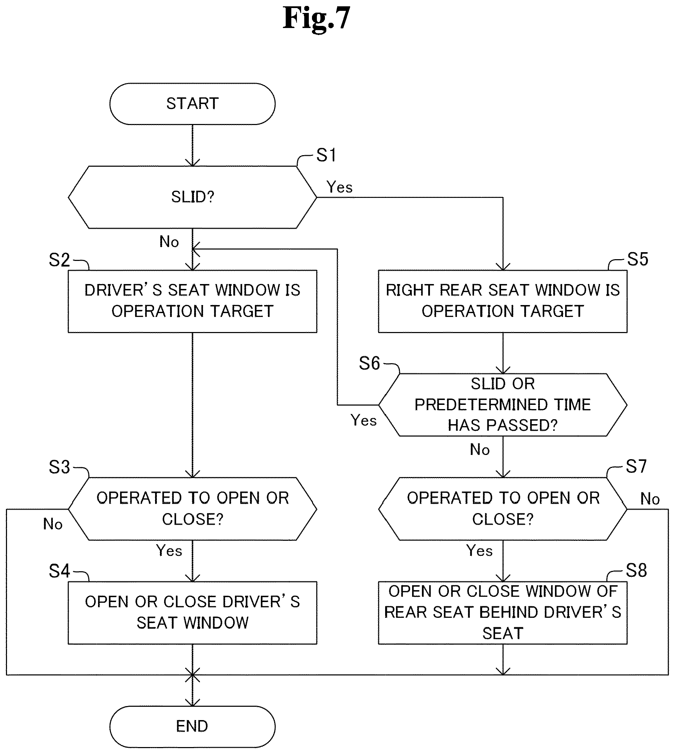

Next, a movement when the abovementioned operation device, particularly, the operation switch denoted by reference numeral 20 in Fig. 1 is operated will be described majorly with reference to the flowchart of Fig. 7.

At the time of initialization such as when the engine is started, as long as the operation switch 20 is not operated to slide backward (step S1, No), an opening-and-closing operation target is set to the "driver's seat window" located on the front side in the vehicle (step S2). Therefore, in a case where the operation switch 20 is operated to open or close as shown in Fig. 3 or 4 at the reference position in the abovementioned state (step S3, Yes), the control device 60 controls to enable the "driver's seat window" to open or close.

Then, after the operation switch 20 is operated to slide backward as shown in Fig. 5 and returned to the reference position as shown in Fig. 6 (step S1, Yes), the opening-and-closing operation target is set to the "window of rear seat behind driver's seat" located on the rear side in the vehicle (step S5). The state where the opening-and-closing operation target is set to the "window of rear seat behind driver's seat" is kept until the operation switch 20 is operated to slide backward again or until a predetermined time passes (step S6, No). In a case where the operation switch 20 is operated to open or close as shown in Fig. 3 or 4 at the reference position in the abovementioned state (step S7, Yes), the control device 60 controls to open or close the "window of rear seat behind driver's seat".

In a case where, while the opening-and-closing operation target is set to the "window of rear seat behind driver's seat" (step S5), the operation switch 20 is operated to slide backward again or a predetermined time has passed (step S6, Yes), the opening-and-closing operation target is set back to the "driver's seat window" again (step S2). Also, in a case where the vehicle comes into a preset operating condition such as when the engine is stopped, the opening-and-closing operation target is set back to the "driver's seat window" as well.

Thus, with regard to the operation device in this example embodiment, before the operation switch 20 is operated to slide backward, the operation switch 20 can be operated to open and close with the window on the front side set as the operation target. Then, after the operation switch 20 is operated to slide backward and returned to the reference position, the operation switch 20 can be operated to open and close with the window on the rear side set as the operation target. Therefore, it is possible to perform the opening-and-closing operation of the two windows located substantially along the slide operation direction, respectively, with the single operation switch 20. As a result, the operation of the windows by the operator is facilitated while the configuration is simplified, and the operability can be further increased.

### [Modified Example]

Although the above description illustrates a case where the operation switch 20 sets an operation target to the "driver's seat window" and the "window of rear seat behind driver's seat" that are located along the fore-and-aft direction of the vehicle, the operation switch may be configured to set an operation target to a window located in any direction. For example, the operation switch 20 may be configured to be slidable in the width direction of the vehicle, that is, in the widthwise direction with reference to the traveling direction from the reference position as described above, and configured to set an operation target to each of the windows that are located along the widthwise direction. As an example, the operation switch firstly sets an opening-and-closing operation target to the "driver's seat window" at the time of initialization and, when the operation switch 20 is operated to rotate in such a state, the operation switch accepts it as an opening-and-closing operation instruction for the "driver's seat window". Then, the operation switch is operated to slide by the slide operation in the leftward direction from the reference position and, when the slide operation is canceled, the operation switch is enabled to return to the reference position. Then, the operation switch is operated to open and close at the reference position after the slide operation and thereby accepts it as an opening-and-closing operation for the "passenger seat window" located in the slide direction. Furthermore, as another example, the operation switch may be configured to slide and shift in a plurality of directions from a reference position and return to the reference position when the slide operation is canceled. For example, the switch device can slide and shift from a reference position in three directions including the backward direction, the leftward direction, and the diagonally leftward and backward direction of the vehicle. An opening-and-closing operation target is set to the "driver's seat window" at a reference position at the time of initialization, is set to the "passenger seat window" after the switch device slides and shifts in the leftward direction, is set to the "window of rear seat behind driver's seat" after the switch device slides and shifts in the backward direction, and is set to the "window of rear seat behind passenger seat" after the switch device slides and shifts in the diagonally leftward and backward direction. Then, an opening-and-closing operation at the reference position after the setting may be accepted as an opening-and-closing operation instruction for each of the windows.

### <Supplementary Notes>

The whole or part of the example embodiments disclosed above can be described as the following supplementary notes. The overview of an operation device according to the present invention will be described below. However, the present invention is not limited to the following configurations.

### (Supplementary Note 1)

An operation device comprising an operating unit capable of an opening-and-closing operation to operate opening and closing of a window mounted on a vehicle, wherein:
the operating unit is configured to be capable of the opening-and-closing operation at a reference position, and is configured so that the operating unit itself shifts from the reference position to another position by a shifting operation and, when the shifting operation is canceled, the operating unit itself returns from the other position to the reference position; and furthermore
the operating unit is configured to accept the opening-and-closing operations when the operating unit is located at the reference position before and after shifting to the other position by the shifting operation as operation instructions to open and close different windows, respectively.

### (Supplementary Note 2)

The operation device according to Supplementary Note 1, wherein
the operating unit is configured to accept the opening-and-closing operation when the operating unit is located at the reference position before shifting to the other position by the shifting operation as an operation instruction to open and close a first window, and accept the opening-and-closing operation when the operating unit is located at the reference position after shifting to the other position by the shifting operation as an operation instruction to open and close a second window located in a direction of shifting by the shifting operation with reference to the first window.

### (Supplementary Note 3)

The operation device according to Supplementary Note 2, wherein
the operating unit is configured to be capable of linearly shifting only in a preset direction by the shifting operation.

### (Supplementary Note 4)

The operation device according to Supplementary Note 2 or 3, wherein
the operating unit is configured to be capable of shifting only in a direction to rear of the vehicle by the shifting operation.

### (Supplementary Note 5)

The operation device according to any of Supplementary Notes 2 to 4, wherein
the operating unit is configured to accept the opening-and-closing operation when the operating unit is located at the reference position before shifting to the other position by the shifting operation as an operation instruction to open and close the first window located at front of the vehicle, and accept the opening-and-closing operation when the opening unit is located at the reference position after shifting to the other position located in rear of the vehicle with reference to the reference position by the shifting operation as an operation instruction to open and close the second window located in rear of the vehicle.

### (Supplementary Note 6)

The operation device according to any of Supplementary Notes 2 to 5, wherein
the operating unit is configured to, when an operating condition of the vehicle satisfies a preset condition in a state that the opening-and-closing operation is accepted as the operation instruction to open and close the second window, accept the opening-and-closing operation as the operation instruction to open and close the first window.

### (Supplementary Note 7)

The operation device according to any of Supplementary Notes 1 to 6, wherein
the operating unit is configured not to shift from the reference position to the other position during the opening-and-closing operation.

### (Supplementary Note 8)

The operation device according to any of Supplementary Notes 1 to 7, wherein
the operating unit is configured not to perform the opening-and-closing operation while shifting from the reference position to the other position.

### (Supplementary Note 9)

The operation device according to any of Supplementary Notes 1 to 8, wherein
the operating unit is configured to accept an operation of pushing down the operating unit itself that is one of the opening-and-closing operations as an operation instruction to open the window, and accept an operation of pulling up the operating unit itself that is one of the opening-and-closing operations as an operation instruction to close the window.

### (Supplementary Note 10)

A window opening-and-closing control method executed by an operation device comprising an operating unit capable of an opening-and-closing operation to operate opening and closing of a window mounted on a vehicle, the window opening-and-closing control method comprising:
controlling to open and close a predetermined window by the opening-and-closing operation at a reference position of the operating unit; and
controlling to open and close another window that is different from the predetermined window by the opening-and-closing operation at the reference position of the operating unit after the operating unit itself shifts from the reference position to another position by a shifting operation and returns from the other position to the reference position by cancelation of the shifting operation.

### (Supplementary Note 11)

The window opening-and-closing control method according to Supplementary Note 10, comprising:
controlling to open and close a first window by the opening-and-closing operation of the operating unit located at the reference position before the operating unit shifts to the other position by the shifting operation; and
controlling to open and close a second window located in a direction of shifting by the shifting operation with reference to the first window by the opening-and-closing operation of the operating unit located at the reference position after the operating unit shifts to the other position by the shifting operation.

Although the present invention has been described above with reference to the example embodiment and so on, the present invention is not limited to the above example embodiment. The configurations and details of the present invention can be changed in various manners that can be understood by one skilled in the art within the scope of the present invention.

### Description of numerals

- 10: cover
- 11: recess
- 12: upper cover
- 20, 30: operation switch
- 21: first operation surface
- 22: second operation surface
- 41, 42, 43: other switches
- 50: movement mechanism
- 51: detecting unit
- 60: control device
- 71: driver's seat window
- 72: window of rear seat behind driver's seat

## Claims

1. An operation device comprising an operating unit capable of an opening-and-closing operation to operate opening and closing of a window mounted on a vehicle, wherein:
the operating unit is configured to be capable of the opening-and-closing operation at a reference position, and is configured so that the operating unit itself shifts from the reference position to another position by a shifting operation and, when the shifting operation is canceled, the operating unit itself returns from the other position to the reference position; and furthermore
the operating unit is configured to accept the opening-and-closing operations when the operating unit is located at the reference position before and after shifting to the other position by the shifting operation as operation instructions to open and close different windows, respectively.

2. The operation device according to Claim 1, wherein
the operating unit is configured to accept the opening-and-closing operation when the operating unit is located at the reference position before shifting to the other position by the shifting operation as an operation instruction to open and close a first window, and accept the opening-and-closing operation when the operating unit is located at the reference position after shifting to the other position by the shifting operation as an operation instruction to open and close a second window located in a direction of shifting by the shifting operation with reference to the first window.

3. The operation device according to Claim 2, wherein
the operating unit is configured to be capable of linearly shifting only in a preset direction by the shifting operation.

4. The operation device according to Claim 2 or 3, wherein
the operating unit is configured to be capable of shifting only in a direction to rear of the vehicle by the shifting operation.

5. The operation device according to any of Claims 2 to 4, wherein
the operating unit is configured to accept the opening-and-closing operation when the operating unit is located at the reference position before shifting to the other position by the shifting operation as an operation instruction to open and close the first window located at front of the vehicle, and accept the opening-and-closing operation when the opening unit is located at the reference position after shifting to the other position located in rear of the vehicle with reference to the reference position by the shifting operation as an operation instruction to open and close the second window located in rear of the vehicle.

6. The operation device according to any of Claims 2 to 5, wherein
the operating unit is configured to, when an operating condition of the vehicle satisfies a preset condition in a state that the opening-and-closing operation is accepted as the operation instruction to open and close the second window, accept the opening-and-closing operation as the operation instruction to open and close the first window.

7. The operation device according to any of Claims 1 to 6, wherein
the operating unit is configured not to shift from the reference position to the other position during the opening-and-closing operation.

8. The operation device according to any of Claims 1 to 7, wherein
the operating unit is configured not to perform the opening-and-closing operation while shifting from the reference position to the other position.

9. The operation device according to any of Claims 1 to 8, wherein
the operating unit is configured to accept an operation of pushing down the operating unit itself that is one of the opening-and-closing operations as an operation instruction to open the window, and accept an operation of pulling up the operating unit itself that is one of the opening-and-closing operations as an operation instruction to close the window.

10. A window opening-and-closing control method executed by an operation device comprising an operating unit capable of an opening-and-closing operation to operate opening and closing of a window mounted on a vehicle, the window opening-and-closing control method comprising:
controlling to open and close a predetermined window by the opening-and-closing operation at a reference position of the operating unit; and
controlling to open and close another window that is different from the predetermined window by the opening-and-closing operation at the reference position of the operating unit after the operating unit itself shifts from the reference position to another position by a shifting operation and returns from the other position to the reference position by cancelation of the shifting operation.

11. The window opening-and-closing control method according to Claim 10, comprising:
controlling to open and close a first window by the opening-and-closing operation of the operating unit located at the reference position before the operating unit shifts to the other position by the shifting operation; and
controlling to open and close a second window located in a direction of shifting by the shifting operation with reference to the first window by the opening-and-closing operation of the operating unit located at the reference position after the operating unit shifts to the other position by the shifting operation.
